# EUROPEAN PATENT APPLICATION

(11) **EP 2 846 603 A2**
(43) Date of publication of application: **11.03.2015**
(21) Application number: 14182036.5
(22) Date of filing: 22.08.2014
(51) Int. Cl.: H04W 88/04

(54) **Reducing the number of radio interfaces by using a mobile terminal as signalling relay for other mobile terminals**

(30) Priority: 30.08.2013 ES 201331289
(71) Applicant: Vodafone IP Licensing Limited, The Connection Newbury Berkshire RG14 2FN (GB); Vodafone España, S.A.U., 28108 Alcobendas (ES)
(72) Inventor: De Pasquale, Andrea, London, W2 6BY (GB); Domínguez Romero, Francisco Javier, London, W2 6BY (GB); Le Pezennec, Yannick, London, W2 6BY (GB)
(74) Representative: Boult Wade Tennant

(57) **Abstract**

The present invention is related to solutions for handling high signalling load in an access network in cellular connections due to smartphones in planned or unplanned events like football matches or concerts in stadium or gathering of thousand people in squares, what causes congestion in terms of usage of the cellular network the devices are connected to. Each UE requires control signalling to maintain its data connection, even when no user data is sent. This fact overloads the network and makes user data transmission very slow. The overload in control channels and signalling traffic represent a problem and it is necessary to remove or reduce such traffic.

The proposed solution is a method for grouping UEs (MUE, SUE) to use the connection from only one master UE (MUE) to the base station so that only one set of control signalling is required.Thus the number of radio interfaces is reduced.

## Description

### TECHNICAL FIELD OF THE INVENTION

The present invention relates to a solution for reducing the signalling traffic in a radio access network in an overloaded situation where several user equipments are connected to the radio access network.

### BACKGROUND OF THE INVENTION

The present invention is related to solutions for handling high signalling load in an access network in cellular connections due to smartphones in planned or unplanned events like football matches or concerts in stadium or gathering of thousand people in squares, what causes congestion in terms of usage of the cellular network the devices are connected to. During events the massive concentration of smartphone presents challenges in terms of the provision of circuit-switched and packet-switched services with a suitable quality for the end user. Such a concentration creates a huge amount of requested 3G packet-switched connection. Each device or user equipment requires control signalling to maintain its data connection, even when no user data is sent. This fact overloads the network and makes user data transmission very slow. The overload in control channels and signalling traffic represent a problem and it is necessary to remove or reduce such traffic.

Some solutions today are related to installing more capacity and to further off-load to a Wi-Fi operator. The problem in these solutions is that the Wi-Fi layer also becomes congested in the same way as the 3G and 2G layers.

Other solutions propose tethering which allows mobile devices to share their Internet connection over USB, Bluetooth, or WiFi like MiFi (MiFi stands for "My Wi-Fi"; a MiFi device can be connected to a mobile phone cellular carrier and provide internet access for up to ten devices). However, these solutions require a manual configuration step such as specifying a WiFi network to connect to, sharing a password, etc, and usually manual establishment.

Other solutions related to solve the described problem are Access network discovery and selection function (ANDSF) and closed subscriber group (CSG):
- ANDSF is an entity within an evolved packet core (EPC) of the system architecture evolution (SAE) for 3GPP compliant mobile networks. The purpose of the ANDSF is to assist user equipment (UE) to discover non-3GPP access networks - such as Wi-Fi or WIMAX - that can be used for data communications in addition to 3GPP access networks (such as HSPA or LTE) and to provide the UE with rules policing the connection to these networks. ANDSF is applied for generic Access Network policy management.
- CSG is a limited set of users with connectivity access to a femtocell (a small, low-power cellular base station, typically designed for use in a home or small business). When a femtocell is configured in CSG mode, only those users included in the femtocell's access control list are allowed to use the femtocell resources. On the other hand, a femtocell can be also configured in Open Access mode, in which any user is allowed access to the femtocell. CSG is applied to femtocell.

These solutions are focused on the network side by for example providing additional Cellular or Femto or Wifi capacity where it is needed a multi-bearer strategy, for example.

Solutions concerned with WLAN (not cellular) connections are also described in US 8081612, US 2012/0106475, ES2301420, but there seems to be no discussion of reducing control signalling.

### SUMMARY OF THE INVENTION

The present invention provides a solution for the aforementioned problem by a method for managing the access of a group of user equipment according to claim 1, a method for establishing a group of user equipment performed by a user equipment according to claim 12, a computer program product, according to claim 13, a user equipment according to claim 14 and a radio network controlling entity according to claim 15.

In a first aspect of the invention there is provided a *method for managing the access of a group of user equipments to a radio access network implemented on a system comprising:*
- *at least a radio access network,*
- *a plurality of user equipments comprising means for establishing a personal area network among them, the personal area network being different from the radio access network, preferably a WiFi network,*
*wherein the radio access network is in communication via radio interface with the user equipments,*
*and wherein the plurality of user equipments belong to the same cluster of cells,*
*characterized in that it comprises the steps of:*
*a.- triggering the establishment of a group of user equipments,*
*b.- connecting a plurality of user equipments through the means for establishing a personal area network and creating a personal area network,*
*c.- establishing the group of user equipments,*
*d.- selecting a master user equipment among the members of the group of user equipments, the rest of user equipments being slave user equipments,*
*e.- closing the communication via radio interface between the slave user equipments and the radio access network,*
*f.- routing traffic between the radio access network and the slave user equipments belonging to the same group of user equipments through the master user equipment of said group, preferably user data being requested by the slave user equipments.*

The proposed solution is a method for grouping user equipments to use the connection from only one master user equipment to the base station so that only one set of control signalling is required. The other slave user equipments send or receive data via a PAN, for example a WiFi connection with the master user equipment. The grouping of devices to share a base station connection is performed automatically without user intervention. This is in contrast to known "tethering" arrangements for sharing a 3G or 4G data connection of one device with other devices by a WiFi connection.

The main idea is to reduce control signalling by establishing a single connection with a base station for a plurality of user equipments.

Taking into account that current user equipments such as smartphones or tablets are able to open at the same time a Wi-Fi or Bluetooth and a 3G or LTE connection, the solution is advantageous in situations where there is congestion in massive events. In these situations a number of UEs (User Equipment, e.g. mobile phones) are automatically bound together via Wi-Fi or bluetooth, whilst their uplink and downlink traffic are routed towards a master UE, and such a master UE is the only one opening a connection with the 3G network.

In contrast with the prior art where normal Mi-Fi connections are opened, this solution allows an automatic mechanism capable to manage a high number of user equipments, triggered by specific conditions, automatically activated and deactivated.

One of the advantages which results from the proposed method is the reduction of policy management from the network.

Even when communication for opening or closing connections towards the network by user equipments establishing groups generates signalling over the cellular network, the resulting signalling towards only one user equipment in a group is more advantageous than the case of not creating groups so that the method is clearly advantageous for a situation of congestion, for example, since the problem is not the quantity of messages or data for one user equipment but to keep several signalling connections opened with several user equipments.

In a second aspect of the invention there is provided a *method for establishing a group of user equipment performed by a user equipment comprising the steps of:*
- *receiving a trigger command,*
- *searching for other visible user equipments, preferably based on personal area network signal level ranking:*
   o *sending a connection sharing request to at least one different user equipment,*
   o *receiving confirmation or rejection from the at least one different user equipment,*
   o *establishing the group if connections are accepted,*
- *sharing information with the rest of the user equipments of the group of user equipments,*

The user equipments in the system are adapted to carry out a method for establishing a group of user equipments in such a way that interaction with the network and other user equipments in the cluster of cells is performed. Advantageously the method allows unloading signalling charge from the network as the user equipments in the cluster of cells communicate to each other through a personal area network.

In a third aspect of the invention there is provided a *computer program product, preferably a mobile application, adapted to carry out a method according to the second aspect of the invention.*

In a fourth aspect of the invention there is provided a *user equipment adapted to carry out a method according to the second aspect of the invention.*

In a fifth aspect of the invention there is provided a *radio network controlling entity adapted to carry out step a) of a method according to the first aspect of the invention.*

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

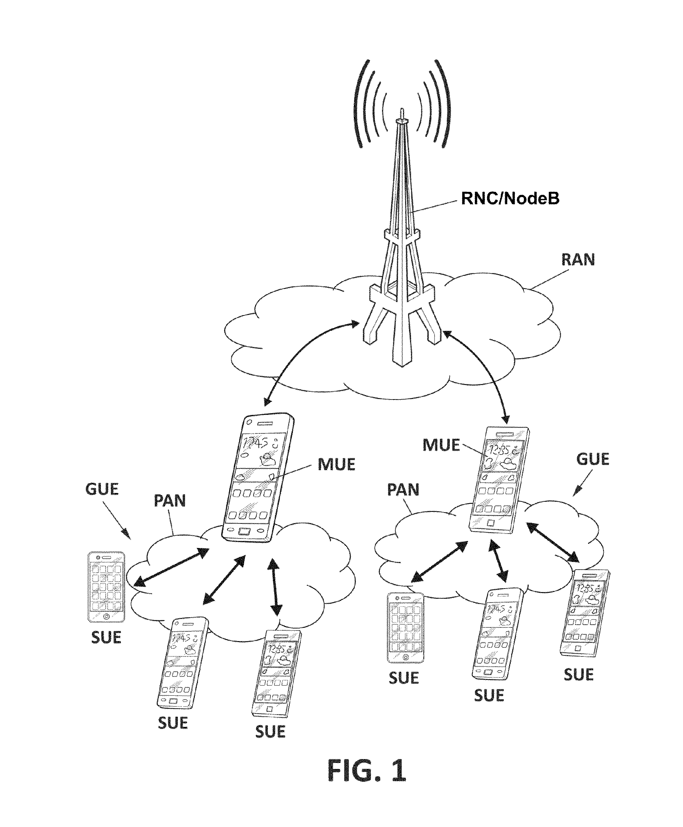

- Figure 1: This figure shows an example of a system in which a method according to the invention is implemented, the figure showing a radio network controller (RNC/NodeB), master user equipments (MUE), slave user equipment (SUE), radio access networks (RAN), personal access networks (PAN) and group of user equipments (GUE).

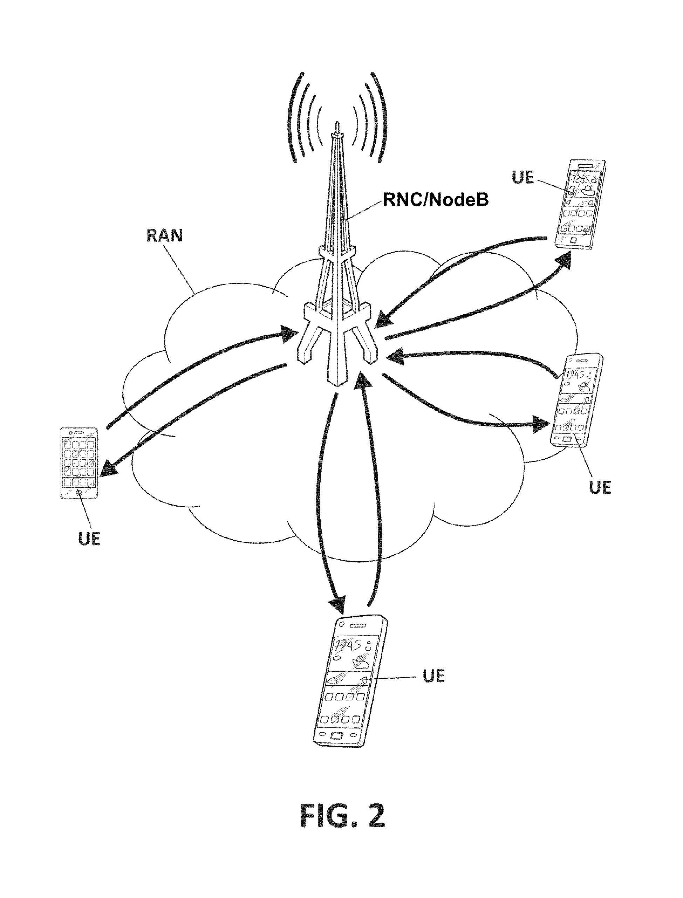

- Figure 2: This figure represents a system in a situation before establishment of the group in the implementation of a method according to the invention. The user equipments are in connection to the radio network controller (RNC/NodeB) through the radio access network (RAN). There can be seen several user equipments (UE), a base transceiver station (BTS) and one or more radio access networks (RAN).

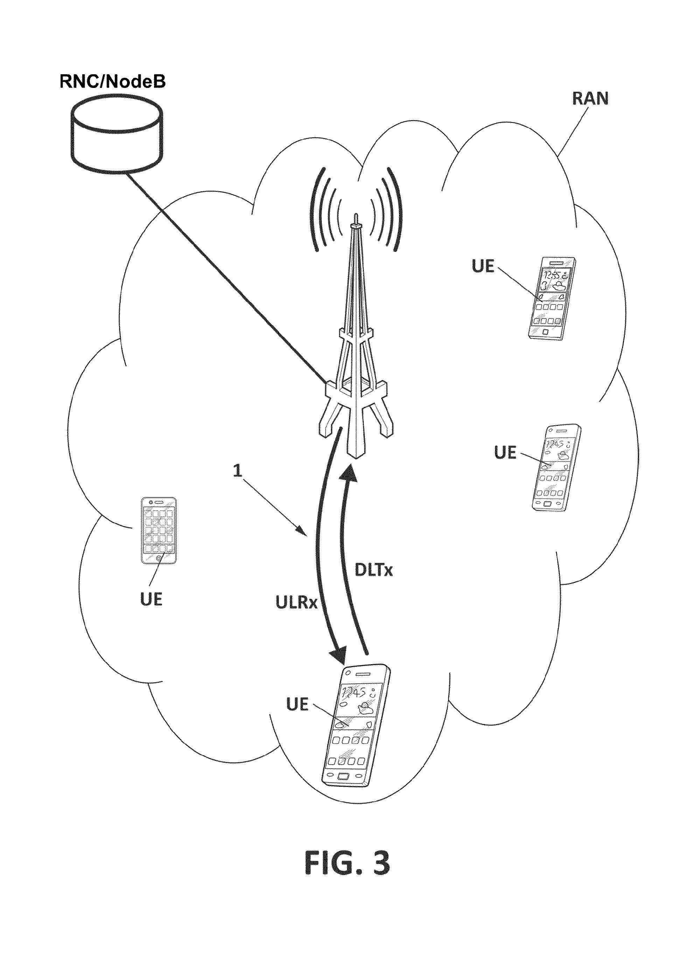

- Figure 3: This figure shows the system as explained and further comprising a radio access network (RAN) adapted to provide connectivity to at least one user equipment (UE), preferably a RNC/eNodeB, in such a way that at least one user equipment (UE) is in communication with the network (RAN) through a predefined control channel (1).

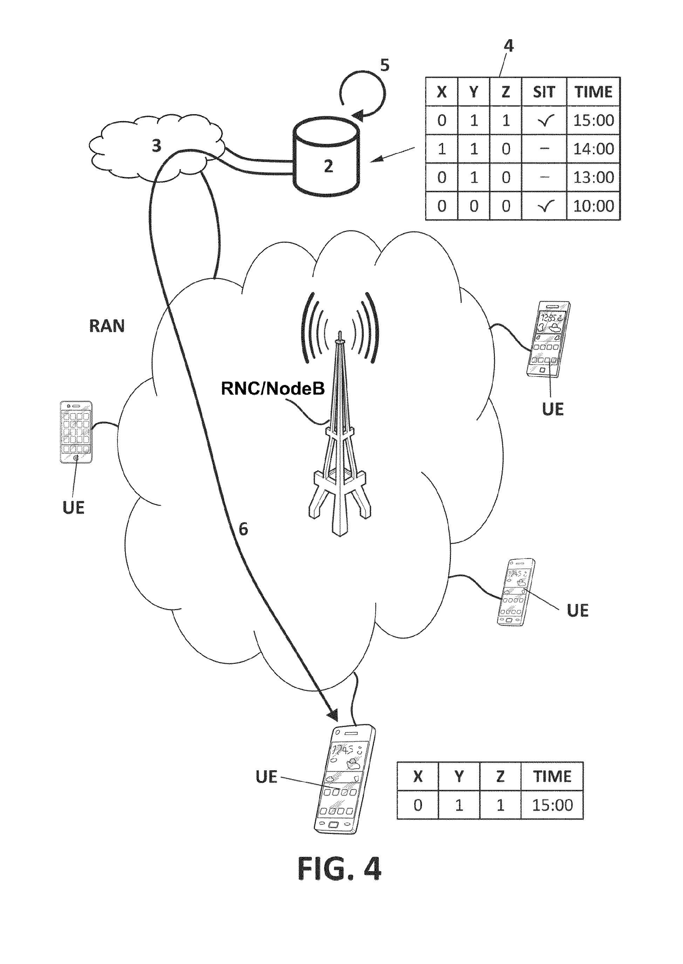

- Figure 4: This figure shows the system as explained and further comprising GPS coordinates (X, Y, Z) detection means (GPS) in the user equipments (UE) in communication to an element (2) in a network (3), preferably the element being a server (2) in the Internet (3).

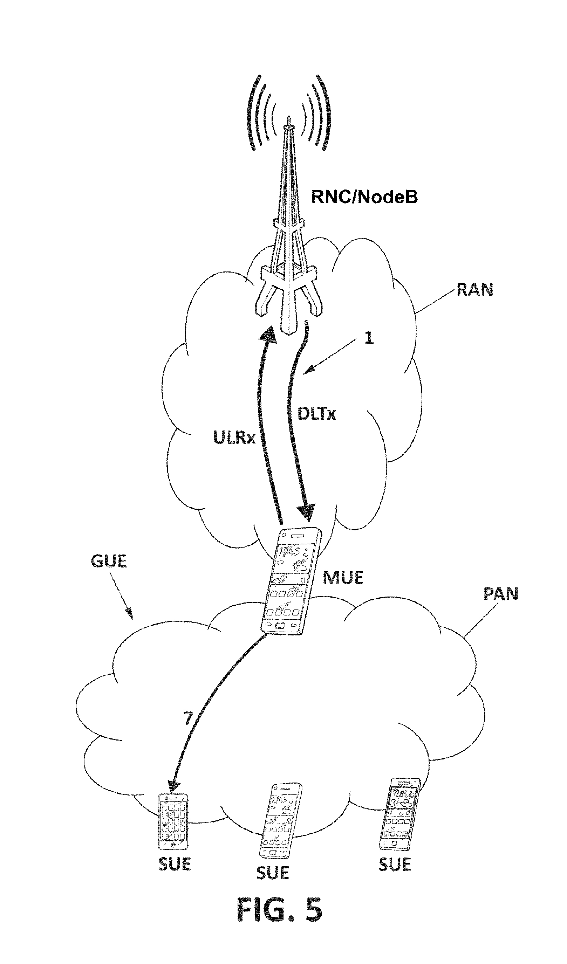

- Figure 5: This figure represents a group of user equipments (GUE) comprising several slave user equipments (SUE) and one master user equipment (MUE) in communication with the radio access network (RAN). In the figure the master (MUE) sends an acknowledgement (7) to one slave (SUE).

### DETAILED DESCRIPTION OF THE INVENTION

Once the object of the invention has been outlined, specific non-limitative embodiments are described hereinafter.

A method according to the invention is performed on a system as the one shown in figure 1 where there is a representation of a radio network controller (RNC/NodeB) which generally represents elements comprised in the radio access network (RAN), two master user equipment (MUE), several slave user equipments (SUE), two personal access networks (PAN) and two groups of user equipments (GUE).

In figure 1 the groups of user equipments (GUE) are shown established. The establishment of the groups (GUE) is performed automatically by the user equipments with no user intervention, after a trigger which can be launched in several ways.

Before establishment of the group, the user equipments are in connection to the radio network controller (RNC/NodeB) through the radio access network (RAN). This situation is represented in figure 2 where there can be seen several user equipments (UE), a radio network controller (RNC/NodeB) and one or more radio access networks (RAN).

Following the different steps in a method according to the invention, the different steps can be carried out in different ways according to the following particular embodiment:

### a.- triggering the establishment of a group of user equipments (GUE)

The triggering, as explained, can be launched after several criteria. In a particular embodiment the triggering condition is the determination of a congestion situation. By congestion situation it is understood the situation where a high number of user equipments (UE) requiring control signalling to maintain its data connection overloads the network and makes user data transmission very slow. In such congestion situation it is necessary to remove or reduce such traffic. On the other hand, the proposed solution is advantageous also in situations where a lot of user equipments (UE) stay for a considerable period of time, such as seconds or milliseconds, with many connections towards the network. Some of the examples are: stadiums, trade fair or demonstrations. In these event scenarios the demand from users in terms of throughput is not satisfied and therefore they accumulate data in a data buffer in queue to be sent or received. In a particular embodiment said data buffer size is taken into account, with a threshold, for the users to trigger the establishment of a group of user equipment (GUE).

Determining a congestion situation is performed, in a particular embodiment, by the radio access network. The radio access network (RAN) system comprises a radio network controller entity (RNC/NodeB), like the one represented in figure 3, adapted to provide connectivity to at least one user equipment (UE), preferably a RNC/eNodeB, in such a way that the at least one user equipment (UE) is in communication with the network (RAN) through a predefined control channel (1) so that the radio network controller entity (RNC/NodeB) determines congestion via an analysis of at least one of the following values:
- download resource usage (DL Tx) for example transmitted power, codes, resource blocks,
- uplink received power (UL Rx) for example received power, noise, or resource blocks,
- transmission time interval occupation,
- number of connections with an HSPA or an LTE Radio Access Bearer (RAB)
- number of active connections with a Radio Access Bearer (RAB) actively transferring data,
and then the radio network controller entity (RNC/NodeB) triggers the establishment of a group of user equipments (GUE), by sending a triggering command to one or all the user equipments (UE) in the radio access network (RAN). Advantageously, the network being in charge of the triggering offloads the user equipments from taking the decision, which is advantageous in a situation where the system requires control from the network.

In a particular embodiment determining a congestion situation is performed by at least one user equipment (UE) comprising GPS coordinates detection means (GPS) in communication to an element (2) in a network (3), preferably the element being a server (2) in the Internet (3). This situation is represented in figure 4. The server (2) on the internet (3) is adapted to
- receive the GPS coordinates (XYZ) from the user equipment (UE) through the radio access network (RAN), preferably periodically, and
- store information (4) about terrestrial areas where congestion is likely to happen in a predetermined time frames
so that the server (2) on the internet (3) determines congestion finding (5) a matching between the GPS coordinates (XYZ) of more than one user equipments (UE) and the stored information (4), and then the server (2) on the internet (3) sends (6) a triggering command to at least one user equipment (UE).

In a particular embodiment the triggering condition is performed by the user equipment (UE) determining that
- its throughput is under a predetermined threshold, for example less than 64 Kbps in a 3G network, and
- it has a radio signal level above another predetermined threshold, and
- there is some data in a data buffer in the user equipment (UE),
and, if this is the case the user equipment (UE) triggers the establishment a group of user equipments (GUE).

In a particular embodiment, determining a congestion situation is performed by at least one of the user equipments (UE) which comprises GPS coordinates detection means (GPS) and stored information in the user equipment (UE) about terrestrial areas where congestion is likely to happen in a predetermined time frame,
so that the user equipment (UE) determines congestion if it:
- finds a matching between the GPS coordinates (XYZ) and the stored information in the user equipment (UE), and
- measures its throughput under a predetermined threshold; and
- measures a radio signal level above another predetermined threshold;
and, if this is the case it triggers the establishment a group of user equipments (GUE).

The mentioned alternatives for triggering a command for forming a group of user equipments (GUE) are

### b.- connecting a plurality of user equipments (UE) through the means for establishing

*a personal area network (PAN) and creating a personal area network (PAN)* Once a triggering condition is determined, the method according to the invention comprises connecting a plurality of user equipments (UE) through the means for establishing a personal area network (PAN) and creating a personal area network (PAN). In a particular embodiment the means for creating a personal area network (PAN) in the user equipment (UE) are closed, so that a previous step is performed, being opening the means for establishing a personal area network (PAN), preferably Bluetooth or WiFi or LTE direct, and then to establish a personal area network (PAN) among the plurality of user equipments (UE).

### c.- establishing the group of user equipments (GUE),

In a particular embodiment, for establishing a group of user equipments (GUE) an identification step is performed in which candidates are selected for belonging to the group of user equipment (GUE), among the plurality of user equipments (UE). Once the candidates for establishing a group (GUE) are selected or identified among several user equipment (UE), there is performed a further step which comprises accepting, by a first user equipment (UE), a binding proposal from a second user equipment (UE) provided one of the following alternatives:
- a predetermined max number of user equipment (UE) in the group of user equipments (GUE) has not been reached or
- the first user equipment (UE) does not belong to another group of user equipments (GUE).

In a particular embodiment, the candidates are identified depending on at least one of the following criteria:
i. user equipment (UE) positioned closer to the one which is identifying, preferably measuring the strongest Wi-Fi or Bluetooth signal,
ii. user equipment (UE) belonging to the same cell, preferably performing a selection of users according to Received Signal Code Power (RSCP) / Reference Signal Received Power (RSRP), or signal quality which is equal to the signal strength (RSCP/RSRP) or received energy per chip divided by the power density in the band criteria, Ec/No in 3G or Reference Signal Received Quality (RSRQ) in 4G,
iii. user equipment (UE) using the same Operating system.

When forming a group of users according to RSCP/RSRP level it is for example performed a selection of users with high difference in RSCP/RSRP to increase gains in terms of power since slave user equipments (SUE) with worse RSCP/RSRP consume more power. One way e.g. is to try first users with more than 3dBs difference in RSCP/RSRP.

In a particular embodiment a maximum number of user equipment (UE) which can belong to a group of user equipment (GUE) is pre-established.

### d.- selecting a master user equipment (MUE) among the members of the group of user equipments (GUE), the rest of user equipments being slave user equipments (SUE),

Further to the establishment of a group (GUE) a master is selected. In a particular embodiment selecting a master user equipment (MUE) is performed by the group of user equipments (GUE) in base of one, or a combination, of the following criteria:
- the user equipment (UE) with the most efficient appropriate capabilities according to the congestion scenario, preferably:
   - LTE or HSPA capable user equipment (UE),
   - UE supporting Fractional DPCH and CPC capable user equipment (UE),
   - UE supporting Enhanced cell_FACH capabilities,
   - Dual Carrier or Single Carrier capable UE,
   - HSDPA 15 codes capable or HSDPA 10 codes capable UE,
   - HSUPA 2 ms capable UE or HSUPA 10 ms capable UE,
- the user equipment (UE) with the highest battery level,
- the user equipment (UE) which is predetermined as master (MUE),
- the user equipment (UE) adapted for accepting the highest number of Wi-Fi

connections open at the same time,
- the user equipment (UE) with the lowest control plane overhead, preferably lowest control channel power,
- the user equipment (UE) with the best Received Signal Code Power (RSCP) level or best Reference Signal Received Power (RSRP).

In a particular example the selection is to use 10 ms TTI. Advantageously this selection allows consuming less resources than a 2ms HSUPA capable user equipment (UE) which allows higher throughput. There is a compromise between throughput and consumption.

In a particular embodiment during congestion events Dual Carrier is deactivated in mobile phones as it consumes more resources than single carrier and causes more congestion issues.

### e.- closing the communication via radio interface between the slave user equipments (SUE) and the radio access network (RAN),

### f.- routing traffic between the radio access network (RAN) and the slave user equipments (SUE) belonging to the same group of user equipments (GUE) through the master user equipment (MUE) of said group, preferably user data (UD) being requested by the slave user eguipments (SUE)

In a particular embodiment the personal area network (PAN) through which the user equipment (UE) communicate to each other is a WiFi network. In a particular embodiment routing traffic is performed by the master user equipment (MUE) acting as a Wi-Fi access point with reference to the other slave user equipments (SUE).

In a particular example the communication among user equipments (UE) is performed automatically by having a pre-established Service Set Identifier (SSID) that is recognized by the user equipments (UE) making periodical polling on available Wi-Fi connections from other user equipments (UE) within a WiFi coverage area. Advantageously this allows the user equipments (UE) to establish the personal area network automatically without asking for a selection of a SSID or a password.

In a particular embodiment, as data traffic belonging to slave user equipments (SUE) is routed through the master (MUE) the data are ciphered using a ciphering key only available in each slave user equipment (SUE).

In a particular embodiment the master user equipment (MUE) opens a Radio Access Bearer (RAB)/ Packet Data Protocol (PDP) context with the 3G/4G (LTE) layer to transmit or receive the packets to be sent or received by all the slave user equipments (SUE).

In a particular embodiment synchronization is maintained between the slave user equipments (SUE) and the master user equipments (MUE) via the personal area network (PAN), preferably WiFi, by sending acknowledgements (7) from the slave user equipments (SUE) to the master user equipments (MUE) every predetermined timeframe, or vice versa, by sending acknowledgements (7) from the master user equipments (MUE) to the slave user equipments (SUE) every predetermined timeframe and if acknowledgements (7) are not received either by the slave user equipment (SUE) or the master user equipment (MUE) at least one of the following steps is performed:
- dropping a slave user equipment (SUE),
- reopening a radio access connection with the radio access network (RAN) by a slave user equipment (SUE),
- joining a different group (GUE) by a slave user equipment (SUE).

A representation of such situation is shown in figure 5 wherein there can be seen the group of user equipments (GUE) comprising several slave user equipments (SUE) and one master user equipment (MUE) in communication with the radio access network (RAN). In the figure the master (MUE) sends an acknowledgement (7) to one slave (SUE).

In a particular embodiment the slave user equipment (SUE) which does not maintain synchronization with a master user equipment (MUE) in its group (GUE) can rejoin the previous group (GUE) or join a new group; but if a second loss of synchronization happens this blocks said slave user equipment (SUE) to join a group within a pre-established timeframe. Advantageously, this prevents user equipments (UE) which are prone to failure from participating in creating and breaking up groups which overloads the network and other user equipments (UE) around.

In a particular embodiment the master (MUE) connection with the radio access network (RAN) is closed or transferred in case of:
- group closing, or
- group modification, or
- master user equipment (MUE) battery level is over a predetermined level.

Advantageously this allows the master user equipment (MUE) to save battery, by changing or swapping the role of being master to a different user equipment (UE) in the group (GUE). In a particular embodiment this task is performed periodically so that several user equipments (UE) in the group (GUE) act as master user equipment (MUE).

In a particular embodiment, data security or privacy when the slave user equipment (SUE) data passes through the master user equipment (MUE) is managed by having a secure connection between the slave (SUE) and the master (MUE).

### System for managing radio access network overload reduction

A system according to the invention comprises
- at least a radio access network (RAN),
- a plurality of user equipments (UE) comprising means for establishing a personal area network (PAN) among them, the personal area network (PAN) being different from the radio access network, preferably a WiFi network,
wherein the radio access network (RAN) is in communication via radio interface with the user equipments (UE),
and wherein the plurality of user equipment (UE) belong to the same cluster of cells.

### Radio access network (RAN)

The radio access network is part of a telecommunication system. Conceptually, it resides between a device such as a mobile phone, a computer, or any remotely controlled machine and a core network (CN). In the present description mobile phones and other wireless connected devices are called user equipments (UE).

In the present invention it is considered that a base transceiver station (BTS) is part of the elements comprised in a general system called radio access network (RAN).

In a particular embodiment the system comprises a radio network controller or RNC/eNodeB.

### User Equipment (UE)

A user equipment (UE) according to the invention is adapted to carry out at least steps b) to f) of a method according to the invention. As explained before, a plurality of user equipments (UE) establishes a group of user equipments (GUE) by communicating to each other through a personal area network (PAN) which can be created after determining, in a particular example, a congestion situation.

In a particular example, in which the maximum number of user equipments (UE) in a group (GUE) is three, the following steps are carried out by one single user equipment (UE):
- A trigger command is received by the network, the network comprising a Radio Network controller (RNC/NodeB) adapted to carry out step a) of a method according to the invention,
- The user equipment (UE) opens the bluetooth means for creating a personal area network based on Bluetooth technology. This allows the candidates search for the establishment of a group (GUE),
- The user equipment (UE) searches for other visible user equipments (UE) based on bluetooth signal level ranking to form a group (GUE); since the maximum number of users in a group (GUE) is pre-established to be three, the user equipment (UE) chooses two other user equipments (UE) basing the decision on a ranking of bluethooth signal search:
   o a connection sharing request is sent to two other user equipment (UE),
   o the two other user equipments (UE)
      - accept if they don't have any other shared connection on going and they have received the network overload indication, or
      - otherwise deny the request,
   o if connections are accepted, then the group (GUE) is established and the user equipment (UE) shares the information of the group (GUE) with the rest of the user equipments (UE) in the group and every UE shares information with the rest of UE of the GUE, such as device type, battery level, received signal level (RSCP/RSRP), maximum number of slave UEs supported, and the like,
   o if connections are not accepted and a group is not successfully formed, the user equipment (UE) performs N attempts, N=1..maximum number of attempts, using each time the next UE in the ranking
      - after these N attempts if the group has less than three users it remains as such, for example a group of two;
         o If the group is only the single user equipment (UE) then the procedure stops;
- The user equipment (UE) shares information with the rest of the user equipments (UE) of the group of user equipments (GUE),
- Subsequently master selection procedure is initiated for the group (GUE): In this particular embodiment the criteria is the battery level or RSCP/RSRP level, so the user equipment (UE) with higher battery level or highest RSCP/RSRP is selected as a master user equipment (MUE),
- Subsequently, the master user equipment (MUE) opens, if it is closed, or keeps, if it is open, a RAB connection and the rest close their RABs connection with the 3G network.

In a particular embodiment the user equipments (UE) are mobile phones, or the so called smartphones.

In a particular embodiment the user equipments (UE) are adapted to run a computer program product, preferably a mobile application, adapted to
- carry out at least steps b) to f) of a method according to the invention, and
- to run in a user equipment (UE) according to the invention.

## Claims

1. Method for managing the access of a group of user equipments (GUE) to a radio access network implemented on a system comprising:
- a radio access network (RAN),
- a plurality of user equipments (UE) comprising means for establishing a personal area network (PAN) among them, the personal area network (PAN) being different from the radio access network
wherein the radio access network (RAN) is in communication via radio interface with the user equipments (UE),
and wherein the plurality of user equipments (UE) belong to the same cluster of cells, **characterized in that** it comprises the steps of:
a.- triggering the establishment of a group of user equipments (GUE),
b.- connecting a plurality of user equipments (UE) through the means for establishing a personal area network (PAN) and creating a personal area network (PAN),
c.- establishing the group of user equipments (GUE),
d.- selecting a master user equipment (MUE) among the members of the group of user equipments (GUE), the rest of user equipments being slave user equipments (SUE),
e.- closing the communication via radio interface between the slave user equipments (SUE) and the radio access network (RAN),
f.- routing traffic between the radio access network (RAN) and the slave user equipments (SUE) belonging to the same group of user equipments (GUE) through the master user equipment (MUE) of said group.

2. Method according to claim 1 **characterized in that** step a) triggering the establishment of a group of user equipments (GUE), is performed after determining a congestion situation in the radio access network (RAN) according to one of the following alternative conditions:
i) the radio access network (RAN) system comprises a radio network controlling entity (RNC/NodeB) adapted to provide connectivity to at least one user equipment (UE), preferably a RNC/eNodeB, in such a way that the at least one user equipment (UE) is in communication with the network (RAN) through at least one predefined control channel (1) so that the radio network controlling entity (RNC/NodeB) determines congestion via an analysis of at least one of the following values:
- download transmitted power (DL Tx),
- uplink received power (UL Rx),
- transmission time interval occupation,
- number of connections with an HSPA or an LTE Radio Access Bearer (RAB)
- number of active connections with a Radio Access Bearer (RAB) actively transferring data,
wherein under this condition the radio network controlling entity (RNC/NodeB) triggers the establishment a group of user equipments (GUE);
ii) at least one user equipment (UE) comprises GPS coordinates detection means (GPS) in communication to an element (2) in a network (3), preferably the element being a server (2) in the Internet (3), adapted to
- receive the GPS coordinates (XYZ) from the user equipment (UE), preferably periodically, and
- store information (4) about terrestrial areas where congestion is likely to happen in a predetermined time frames
so that the element (2) in the network (3) determines congestion finding (5) a matching between the GPS coordinates (XYZ) of more than one user equipments (UE) and the stored information (4), and then said element (2) in the network (3) sends (6) a triggering command to at least one user equipment (UE);
iii) at least one of the user equipments (UE) determines that
- its throughput is under a predetermined threshold and
- it has a radio signal level above another predetermined threshold, and
- there is some data in a data buffer in the user equipment (UE),
and, if this is the case it triggers the establishment a group of user equipments (GUE);
iv) at least one the user equipment (UE) comprises
- GPS coordinates detection means (GPS)
- and stored information in the user equipment (UE) about terrestrial areas where congestion is likely to happen in a predetermined time frame, so that the user equipment (UE) determines congestion if it:
- finds a matching between the GPS coordinates (XYZ) and the stored information in the user equipment (UE), and
- measures its throughput under a predetermined threshold; and
- measures a radio signal level above another predetermined threshold;
and, if this is the case it triggers the establishment a group of user equipments (GUE).

3. Method according to any one of claims 1 or 2 **characterized in that** step c) establishing the group of user equipments (GUE) comprises identifying candidates for belonging to the group of user equipment (GUE), among the plurality of user equipments (UE), which optionally further comprises accepting, by a first user equipment (UE), a binding proposal from a second user equipment (UE) provided one of the following alternative conditions:
- a predetermined max number of user equipments (UE) in the group of user equipments (GUE) has not been reached or
- the first user equipment (UE) does not belong to another group of user equipments (GUE).

4. Method according to claim 3 **characterized in that** identifying candidates for belonging to the group of user equipment (GUE) is performed depending on at least one of the following criteria:
i. user equipment (UE) positioned closer to the one which is identifying, preferably measuring the strongest Wi-Fi or Bluetooth signal,
ii. user equipment (UE) belonging to the same cell, preferably performing a selection of users according to Received Signal Code Power (RSCP) / Reference Signal Received Power (RSRP), or the signal quality which is equal to the signal strength (RSCP/RSRP) or received energy per chip divided by the power density in the band criteria, Ec/No in 3G or Reference Signal Received Quality (RSRQ) in 4G,
iii. user equipment (UE) using the same Operating system.

5. Method according to any one of claims 1 to 4 **characterized in that** previous to step b) an additional step is performed that is creating a personal area network (PAN) among the plurality of user equipments (UE).

6. Method according to any one of claims 1 to 5 **characterized in that** step d.- selecting a master user equipment (MUE) is performed by the group of user equipments (GUE) in base of one, or a combination, of the following criteria:
- the user equipment (UE) with the most efficient appropriate capabilities according to the congestion scenario, preferably:
- LTE or HSPA capable user equipment (UE),
- UE supporting Fractional DPCH and CPC capable user equipment (UE)
- UE supporting Enhanced cell_FACH capabilities,
- Dual Carrier or Single Carrier capable user equipment (UE),
- HSDPA 15 codes capable or HSDPA 10 codes capable user equipment (UE),
- HSUPA 2 ms capable UE or HSUPA 10 ms capable user equipment (UE),
- the user equipment (UE) with the highest battery level,
- the user equipment (UE) which is predetermined as master user equipment (MUE),
- the user equipment (UE) adapted for accepting the highest number of Wi-Fi connections open at the same time,
- the user equipment (UE) with the lowest control plane overhead, preferably lowest control channel power,
- the user equipment (UE) with the best Received Signal Code Power (RSCP) level or best Reference Signal Received Power (RSRP).

7. Method according to any one of claims 1 to 6 **characterized in that** step f.- routing traffic is performed by the master user equipment (MUE) acting as a Wi-Fi access point with reference to the other slave user equipments (SUE).

8. Method according to claim 7 **characterized in that** in step f.- routing traffic, further comprises maintaining synchronization between the slave user equipments (SUE) and the master user equipments (MUE) by sending acknowledgements (9) from the slave user equipments (SUE) to the master user equipments (MUE) every predetermined timeframe, or vice versa, by sending acknowledgements (9) from the master user equipments (MUE) to the slave user equipments (SUE) every predetermined timeframe and if acknowledgements (9) are not received either by the slave user equipment (SUE) or the master user equipment (MUE) then there is performed:
- dropping a slave user equipment from the group (SUE) then optionally reopening a radio access connection with the radio access network (RAN) by the dropped slave user equipment (SUE); and then, optionally joining a different group (GUE) by a slave user equipment (SUE).

9. Method according to any one of claims 1 to 8 **characterized in that** step f.- routing traffic is performed by the master user equipment (MUE) by opening a Radio Access Bearer (RAB)/ Packet Data Protocol (PDP) context with the 3G/4G layer to transmit or receive the packets to be sent or received by all the slaves user equipments (SUE).

10. Method according to any one of claims 1 to 9 **characterized in that** Master (MUE) connection with the radio access network (RAN) is closed or transferred in case of:
- group closing, or
- group modification, or
- master user equipment (MUE) battery level is under a predetermined level,
- master user equipment (MUE) RSCP/RSRP level has changed by more than a given threshold, or
- master user equipment (MUE) has performed a handover between cells.

11. Method according to any one of claims 1 to 10 **characterized in that** the master (MUE) is swapped to a different user equipment (UE) belonging to the same group (GUE) periodically.

12. Method for establishing a group of user equipment (GUE) performed by a user equipment (UE) comprising the steps of:
- receiving a trigger command,
- searching for other visible user equipments (UE), preferably based on personal area network signal level ranking:
o sending a connection sharing request to at least one different user equipment (UE),
o receiving confirmation or rejection from the at least one different user equipment (UE),
o establishing the group (GUE) if connections are accepted,
- sharing information with the rest of the user equipments (UE) of the group of user equipments (GUE).

13. Computer program product, preferably a mobile application, adapted to carry out a method according to claim 12.

14. User equipment (UE) adapted to carry out a method according to claim 12.

15. Radio Network controlling entity (RNC/NodeB) adapted to carry out step a) of a method according to claim 1.
